# EUROPÄISCHE PATENTANMELDUNG

(11) **EP 0 740 026 A2**
(43) Veröffentlichungstag der Anmeldung: **30.10.1996**
(21) Anmeldenummer: 96105305.5
(22) Anmeldetag: 03.04.1996
(51) Int. Cl.: E04D 3/08, E04B 7/04, A01G 9/14

(54) **Tragelemente für die Scheiben eines Glasdaches**

(30) Priorität: 29.04.1995 DE 19515818
(71) Anmelder: Firma J. Eberspächer, D-73730 Esslingen (DE)
(72) Erfinder: Siemer, Gerd, 73728 Esslingen (DE); Tietze, Peter, 08066 Zwickau (DE)

(57) **Zusammenfassung**

Für eine rationelle Ausbildung von Grat- und Firstverbindungen eines Glasdaches mit einem Gerüst aus Sprossen (1) werden multifunktionale Tragelemente vorgeschlagen, die auch als Fußlager (2) für die Sprossen (1) eingesetzt werden können.

Eine erste Ausführung eines solchen Tragelementes ist ein Hohlprofilstab (4) mit einem rechtwinkligen Dreieck-Querschnitt, bei dem in der Ebene der Hypothenuse des Dreieck-Querschnittes eine erste Lasche (5) nach außen absteht. Diese Lasche dient zum einen dazu, das Tragelement auf einem Auflager befestigen zu können. Zum anderen können zwei der Hohlprofilstäbe (4) über diese Laschen (5) miteinander zu einem Doppel-Hohlprofilstab verbunden werden, der als Firstgrat (3) einsetzbar ist.

Als Auflager und Gratverbindungen für unter beliebigen Winkeln anzusetzende bzw. anzubindende Glaselemente dienen bei einer zweiten Ausführungsform über je ein Winkelstück verbindbare Kastenprofile. Die Form des Winkelstückes bestimmt jeweils die Auflageschräge bzw. den Winkel zwischen aneinander grenzenden Glaselementen.

Die vorgenannten Kastenprofile lassen sich zu Dehnungs-Ausgleichssprossen zusammensetzen.

## Beschreibung

Die Erfindung betrifft Tragelemente für die Scheiben eines Glasdaches.

Bei den bisher bekannten Tragelementen müssen die eingesetzten Teile wie Sprossen, Fuß- und Gratlager abmessungs- und aufbaumäßig jeweils auf den konkreten Anwendungsfall ausgelegt, d.h. unterschiedlich vorgefertigt sein. Dies ist unrationell.

Hier eine Verbesserung zu schaffen, ist das Problem, mit dem sich die Erfindung beschäftigt.

Eine erste erfindungsgemäße Lösung besteht darin, ein Tragelement zu schaffen, das als Hohlprofilstab mit rechtwinkligem Dreiecksquerschnitt ausgebildet ist, und bei dem längs der Hypothenuse des Dreieckquerschnittes eine erste Lasche nach außen absteht.

Ein gleicher erfindungsgemäßer Hohlprofilstab kann verwendet werden, um einerseits eine Sprosse auf einem Auflager zu befestigen und andererseits um eine Gratverbindung zwischen zwei Sprossen durchzuführen. Im zuletzt genannten Fall sind zwei gleiche Hohlprofilstäbe miteinander zu kombinieren, was nachfolgend noch näher erläutert werden wird.

Bei der Befestigung einer Sprosse auf einem Auflager wird der dreieckige Hohlprofilstab fest mit dem Auflager verbunden. Dies geschieht dadurch, daß durch Bohrungen in der ersten Lasche Schrauben in das Auflager eingreifen, mit denen der Hohlprofilstab fest auf das Auflager aufschraubbar ist.

Die Sprossen liegen mit einer ihrer Stirnseiten an derjenigen Kathete des Dreieckprofiles des Hohlprofilstabes an, die der ersten zur Befestigung an dem Auflager dienenden Lasche gegenüberliegt. Befestigt können die Sprossen dort über seitlich an diesen angreifende, mit den Dreieckprofilen verschraubbaren, Winkeln werden.

Die Sprossen können bereits in einer größeren Anzahl mit einem Hohlprofilstab fest verbunden sein, um dann in diesem Zustand den mit den Sprossen eine Baueinheit bildenden Hohlprofilstab über dessen Lasche auf ein Auflager aufzuschrauben.

An der der ersten Lasche gegenüberliegenden Kathete kann über die an die erste Lasche direkt angrenzende Kathete eine zweite Lasche über das Dreieckprofil des Hohlprofilstabes hinausragen. Diese zweite Lasche dient dazu, zwischen einer Auflageleiste für aufzulegende Glaselemente und dem Bereich des Dreieckprofiles zwischen den beiden Laschen einen mit Dicht- bzw. Isoliermaterial ausfüllbaren, von den Glaselementen unbelasteten Raum zu schaffen. Näheres hierzu kann den weiter unten angegebenen Ausführungsbeispielen entnommen werden.

Eine First- oder Gratverbindung wird mit den erfindungsgemäßen Tragelementen dadurch geschaffen, daß zwei dieser Elemente mit ihren Hypothenusen und zur gleichen Seite ausgerichteten ersten Laschen aneinander geschraubt werden. Die an den Grat bzw. First anzuschließenden Sprossen können sodann an den von den ersten Laschen entfernt liegenden Katheten befestigt werden. Die Glaselemente kommen auf den den ersten Laschen benachbarten Katheten des Hohlprofilstabes zur Auflage. Zwischen den Glaselementen und dem Hohlprofilstab wird in an sich bekannter und üblicher Weise Dicht- und Isoliermaterial aufgebracht. Ein derart aufgebautes Grat- bzw. Firstlager führt zu einer äußerst geringen sichtbaren unteren Ansichtsbreite. Außer dem Umstand, daß für ein Grat- und ein Fußlager der Sprossen eines Glasdaches in wirtschaftlich rationeller Weise gleiche Hohlprofilstäbe verwendet werden können, bieten die erfindungsgemäß kombinierbaren First- und Gratlager den weiteren Vorteil, auf einfache Weise die erwähnte geringe untere Ansichtsbreite verwirklichen zu können. Diese Ansichtsbreite kann erfindungsgemäß beispielsweise auf unter 10 mm ausgelegt werden.

Mit bestimmten Dreieckprofilen können jeweils nur bestimmte Winkel, d.h. Auflagewinkel einerseits und Grat- bzw. Firstwinkel andererseits erreicht werden. Es ist daher zweckmäßig, diese Profile lediglich für die am häufigsten vorkommenden Neigungen von 30, 45 und 60 Winkelgrad vorzusehen.

Für abweichende beliebige andere Neigungen empfehlen sich insbesondere für die Grat- und Firstverbindungen andersartig aufgebaute Tragelemente. Auch hier zielt die Erfindung darauf ab, solche Elemente möglichst vielseitig einsetzen zu können, um insgesamt mit möglichst wenigen Bauteilen eine möglichst große Anzahl unterschiedlich geformter Glasdächer herstellen zu können.

Derartige Profile können nach einer Variante der erfindungsgemäßen Lösung aus einer Kombination zweier über ein Winkelstück verbundener Kastenprofile bestehen. Die Kastenprofile besitzen einen quaderförmigen Querschnitt mit auf einer Längsseite an den Enden jeweils vorgesehenen Rücksprüngen und einer an einem Ende der Längsseite von dem jeweiligen Rücksprung senkrecht zu der betreffenden Längsseite verlaufenden, auskragenden Lasche.

Ein Verbindungselement für einen Grat oder First mit beliebigem Winkel kann aus den vorstehend beschriebenen Kastenprofilen durch eine Verbindung über ein mit beliebigem Winkel geformtes und einfach herzustellendes Winkelstück geschaffen werden. Das Winkelstück kann beispielsweise mit den beiden zu kombinierenden gleichen Kastenprofilen verschraubt werden. Näheres hierzu kann den weiter unten folgenden Ausführungsbeispielen entnommen werden.

Die vorstehend beschriebenen Kastenprofile können außer als Gratlagerelemente erfindungsgemäß auch noch für andere Zwecke eingesetzt werden.

Durch einen solchen Einsatz kann eine Sprosse mit Dehnungsausgleich in zur Längserstreckung der Sprosse senkrechter Richtung eines Glasdaches geschaffen werden. Für einen solchen Mehrzweckeinsatz können die Kastenprofile eine gegenüber einer Sprosse halbe Breite besitzen. Dadurch bilden zwei aneinandergefügte Kastenprofile die Breite einer Sprosse. Durch Anpassung der übrigen Abmessungen der Kastenprofile an diejenigen der Sprossen weisen aneinandergesetzte Kastenprofile praktisch die Form einer Sprosse auf. Durch versetztes Aneinandersetzen bewirken die jeweils auf gegenüberliegenden Stirnseiten einer zusammengesetzten Sprosse liegenden auskragenden Laschen, daß durch das Zusammensetzen keine Trennfuge von außen erkennbar ist.

Wird die zusammengesetzte Sprosse über eine der beiden Laschen auf einem Auflager befestigt und ein Träger der Glaselemente an der anderen Lasche im Bereich der Rücksprünge zwischen den beiden Kastenprofilen, ist ein Verschieben in Laschenrichtung durch eine Verschiebeverbindung zwischen beiden Kastenprofilen möglich. Die Kastenprofile können sich dann bei einer Ausdehnung des Daches in die betreffende Richtung gegeneinander verschieben. Auch dies wird im einzelnen noch besser aus der Beschreibung der Ausführungsbeispiele verständlich.

In der Zeichnung sind verschiedene Ausführungsbeispiele der Erfindung dargestellt.

Es zeigen
- Fig. 1: eine perspektivische Darstellung der Sprossenanordnung eines Glasdaches mit gegeneinander geneigten Flächen sowie Auflage- und Grat-Befestigungselementen,
- Fig. 2: einen Schnitt durch ein als Dreieckhohlprofilstab ausgebildetes Fußlager einer Sprosse,
- Fig. 3: einen Schnitt durch eine Gratverbindung mit kombinierten Dreieckhohlprofilstäben,
- Fug. 4: einen Schnitt durch ein als Dreieckhohlprofilstab ausgebildetes Wandanschlußlager,
- Fig. 5: einen Schnitt durch ein aus Kastenprofilen zusammengesetztes Gratlager,
- Fig. 6: einen Schnitt durch eine aus zwei Kastenprofilen zusammengesetzte Sprosse mit Dehnungsausgleich.

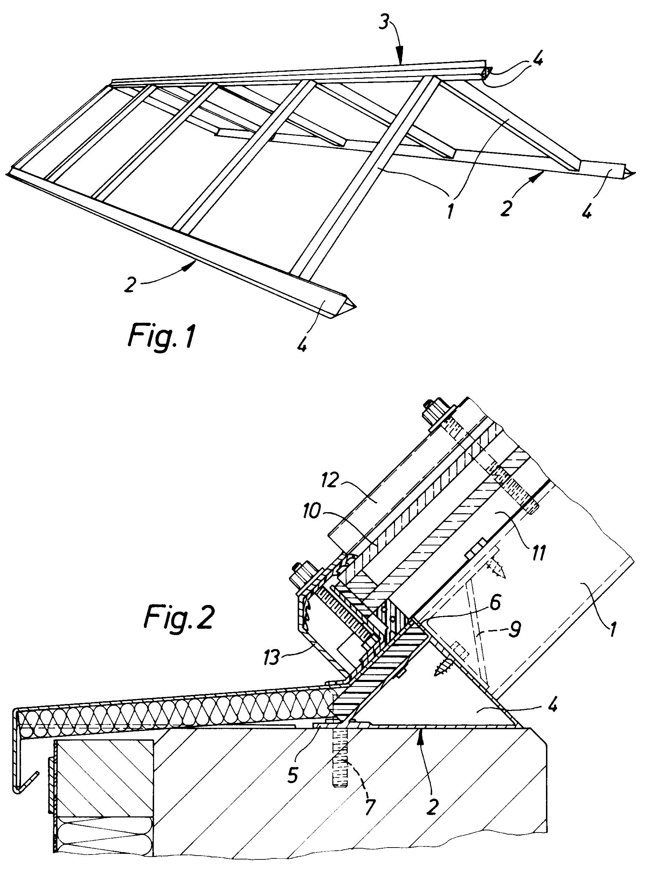

In Fig. 1 ist ein aus Sprossen 1, Fußlagern 2 und einem Firstgrat 3 bestehendes Grundgerüst eines Glasdaches dargestellt. Die Fußlager 2 sind einzelne Hohlprofilstäbe 4 mit jeweils einem rechtwinkligen Dreieck-Querschnitt. Der Firstgrat 3 am oberen Ende der Sprossen 1 besteht aus zwei miteinander verbundenen Hohlprofilstäben 4.

Spezielle Einbauformen der Hohlprofilstäbe 4 sind in den Fig. 2 bis 4 wiedergegeben. Jeder Hohlprofilstab 4 besitzt danach jeweils eine in der Ebene seiner Hypothenuse liegende erste Lasche 5 sowie eine an einer in der Ebene einer Kathete liegende zweite Lasche 6.

Bei dem Einsatz des Hohlprofilstabes 4 als Fußlager 2 in Fig. 2 ist dieser über Schrauben 7, die durch Bohrungen in der ersten Lasche 5 hindurchgreifen, fest mit einem gebäudeseitigen Auflager verbunden.

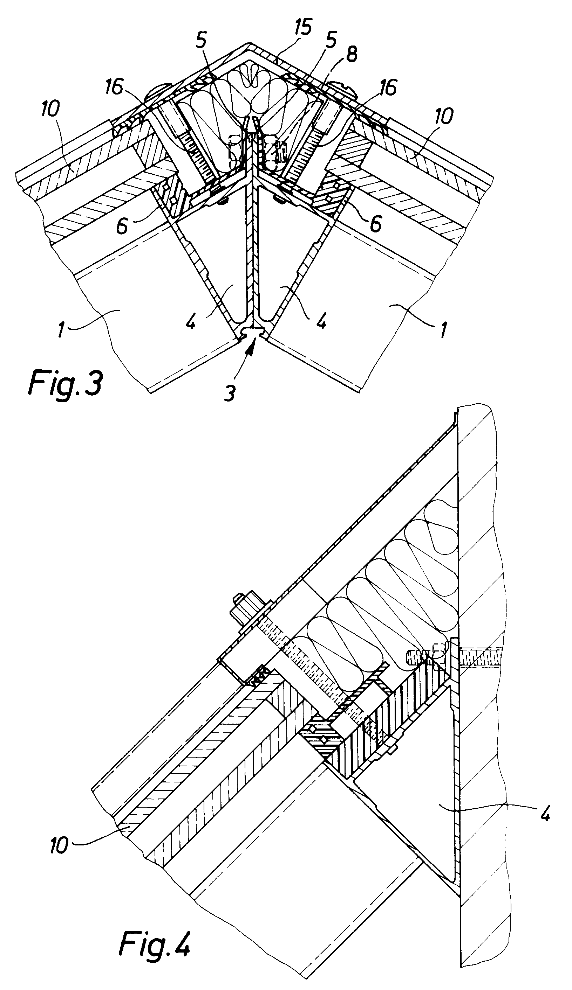

Bei der Ausführung nach Fig. 3 sind die beiden den Firstgrat 3 bildenden Hohlprofilstäbe 4 über deren erste Laschen 5 durchgreifende Schrauben 8 fest miteinander verbunden.

An dem als Fußlager 2 (Fig. 2) für die Sprossen 1 dienenden Hohlprofilstab 4 sind die Sprossen 1 über Winkel 9, die an den Sprossen 1 seitlich angreifen, angeschraubt. Das gleiche gilt für die Befestigung der Sprossen 1 an den Hohlprofilstäben 4 des Firstgrates 3 (Fig. 3 ohne entsprechende Darstellung).

Wie beispielsweise aus der Fig. 2 ersichtlich ist, liegt ein Glaselement 10 über ein Dichtprofil 11 auf einer Sprosse 1 auf. Fixiert sind benachbarte Glaselemente 10 auf den Sprossen 1 über Abdeckleisten 12, mit denen die einzelnen Glaselemente 10 an ihren Fugen abgedeckt sind. Die Abdeckleisten 12 sind mit den Sprossen 1 verschraubt.

Am unteren Ende der Glaselemente 10 ist ein gewinkeltes Abdeckblech 13 mit dem das Fußlager 2 bildenden Hohlprofilstab 4 über Schrauben verbunden. In üblicher Weise ist unter den Abdeckungen (Abdeckleisten 12 und Abdeckblech 13) und zwischen den Glaselementen 10 und deren Auflagern (Sprossen 1 und Fußlager 2) wärmeisolierendes Dichtmaterial vorgesehen.

Bei dem Firstgrat 3 nach Fig. 3 liegen die Glaselemente 10 ebenfalls über Dicht- und Isolationsmaterial auf den den Firstgrat bildenden Hohlprofilstäben 4 auf. Gegenüber den Glaselementen 10 dichtende Abdeckungen 15 sind über Schrauben 16 mit den Hohlprofilstäben 4 fest verspannt.

In Fig. 4 ist ein Wandabschluß mit einem Hohlprofilstab 4 dargestellt. Die Glaselemente 10 sind in grundsätzlich gleicher Weise mit dem dortigen Hohlprofilstab 4 verbunden wie in den Beispielen nach den Fig. 2 und 3.

Mit den Hohlprofilstäben 4 ist je Form eines solchen Stabes jeweils nur eine Anschlußschräge bzw. ein Grat mit einem bestimmten Winkel realisierbar. Diese Ausführungsart eignet sich daher vorzugsweise nur für Standardschrägen von beispielsweise 30, 45 und 60 Winkelgraden. Bei mehr als realisierbar gewünschten Schrägen wäre eine unerwünscht große Lagerhaltung an verschiedenen Hohlprofilstäben 4 erforderlich.

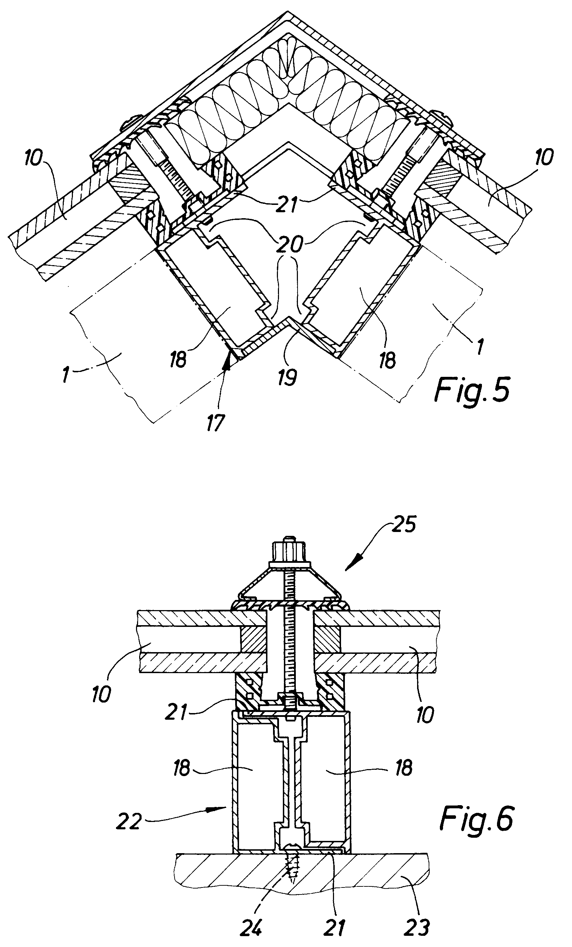

Für beliebige Schrägenwinkel wird daher eine andere Art eines Tragelementes gewählt. Als Firstgrat 17 sind solche Tragelemente in Fig. 5 dargestellt. Mit 10 sind dort wiederum die Glaselemente angedeutet. Der Firstgrat 17 setzt sich zusammen aus zwei einzelnen formgleichen Kastenprofilen 18 als Tragelemente, die über ein Winkelstück 19 miteinander verbunden sind. Durch Winkelstücke 19 mit unterschiedlich großer Abwinkelung können mit gleichen Kastenprofilen 18 auf einfache Weise unterschiedliche Auflageschrägen für einen Firstgrat erreicht werden. An jeweils einer Längsseite sind die Kastenprofile 18 an den Enden mit Rücksprüngen 20 versehen. An den freien Enden der Rücksprünge 20 kragt jeweils eine Lasche 21 aus den schmalen Längsseiten der Kastenprofile 18 heraus. An diesen Laschen 21 sind die Halterungen und Abdeckungen der Glaselemente 10 befestigt. Die Sprossen 1 sind wie bei den Ausführungen nach Fig. 2 und 3 an den Hohlprofilstäben 4 des Firstgrates 17 angeschlossen.

Bei der Ausführung nach Fig. 6 sind zwei Kastenprofile 18 zu einer als Dehnungsausgleichsstück dienenden Sprosse 22 zusammengesetzt. Dafür sind die Kastenprofile 18 gegenseitig derart verdreht, daß die Laschen 21 auf gegenüberliegenden Längsseiten dieser Profile zu liegen kommen. Auf einem gebäudeseitigen Auflager 23 ist das linke Kastenprofil 18 über eine Schraube 24 lagefixiert befestigt. An der oberen Lasche 21 des rechten Kastenprofiles 18 ist ein Träger 25 für die Glaselemente 10 fest angeschraubt. Bei einer Längenausdehnung der Glaselemente 10 können sich die beiden Kastenprofile 18 gegeneinander verschieben, d.h. das rechte Kastenprofil verschiebt sich auf dem lagefest fixierten linken Kastenprofil 18.

Mit den vorstehend beschriebenen erfindungsgemäßen Auflagern und Gratverbindungen (Hohlprofilstäbe 4 einerseits und Kastenprofile 18 mit unterschiedlich gewinkelten Winkelstücken 19 andererseits) lassen sich beliebige Glasdachformen aus einzelnen in beliebigen Winkeln aneinanderstoßenden Glaselementen 10 aufbauen. Die hierfür notwendige Lagerhaltung an Bauteilen ist durch die Verwendung der erfindungsgemäßen Profile äußerst gering. Dadurch ist eine kostengünstige Herstellung verschiedener Dachformen auf einfache Weise möglich.

## Patentansprüche

1. Tragelement für die Scheiben eines Glasdaches,
**dadurch gekennzeichnet**,
daß das Tragelement als ein Hohlprofilstab (4) mit einem rechtwinkligen Dreieck-Querschnitt und einer in Längsrichtung der Hypothenuse dieses Dreiecks auskragenden ersten Lasche (5) ausgebildet ist.

2. Tragelement nach Anspruch 1,
**dadurch gekennzeichnet**,
daß in der ersten Lasche (5) Befestigungsbohrungen vorgesehen sind.

3. Tragelement nach Anspruch 1 oder 2,
**dadurch gekennzeichnet**,
daß in Längsrichtung derjenigen Kathete des Profil-Dreieck-Querschnittes, die von dem von der ersten Lasche (5) entfernt liegenden Scheitelpunkt ausgeht, eine zweite Lasche (6) nach außen absteht, die zusammen mit der ersten Lasche (5) an die gleiche Kathete des Dreieck-Querschnittes angrenzt.

4. Tragelement nach einem der vorhergehenden Ansprüche,
**dadurch gekennzeichnet**,
daß zur Bildung einer Gratverbindung zwei Befestigungselemente (4) nach Anspruch 2 oder 3 über ihre Hypothenusen und die jeweils erste Lasche (5) aneinanderliegend miteinander verbunden, insbesondere verschraubt, sind.

5. Tragelement für die Scheiben eines Glasdaches nach einem der vorhergehenden Ansprüche,
**dadurch gekennzeichnet**,
daß die Sprossen (1) des Glasdaches stirnseitig an einer der beiden Katheten des Dreieckprofiles anliegen und über seitlich an den Sprossen (1) angebrachte Befestigungsmittel, wie insbesondere Winkel (9), mit der betreffenden Katheten-Seite des Hohlprofilstabes (4) verbunden, insbesondere verschraubt, sind.

6. Tragelement für eine First- oder Gratverbindung von Sprossen eines Glasdaches,
**dadurch gekennzeichnet**,
daß das Tragelement eine Kombination aus zwei Kastenprofilen (18) mit jeweils Rücksprüngen (20) an den beiden Enden einer Längsseite ist, daß aus den Rücksprüngen (20) senkrecht zu der jeweiligen betreffenden Längsseite der Kastenprofile (18) Laschen (21) auskragen, daß beide Kastenprofile (18) an den laschenfreien Enden über ein Winkelstück (19) geneigt zueinander verbunden sind und daß die mit den Rücksprüngen (20) versehenen Längsseiten der Kastenprofile (18) sich gegenüberliegen.

7. Ausgleichsdehnungen erlaubendes Tragelement für die Scheiben eines Glasdaches nach einem der vorhergehenden Ansprüche,
**dadurch gekennzeichnet**,
daß dieses gebildet ist aus zwei aneinander gelegten Kastenprofilen (18) nach Anspruch 6, wobei sich die mit den Rücksprüngen (20) versehenen Längsseiten gegenüberliegen und die Laschen (21) sich an entgegengesetzten Enden befinden und wobei ferner ein Träger (25) für einzelne Glaselemente (10) des Glasdaches an einer der Laschen (21) im Bereich der Rücksprünge (20) fest angebunden ist und wobei des weiteren eine feste Verbindung zwischen der anderen Lasche (21) und einem Gebäudeauflager (23) besteht und daß zwischen beiden Kastenprofilen (18) eine Verschiebeverbindung längs der Laschen (21) gegeben ist.
